# EUROPEAN PATENT APPLICATION

(11) **EP 4 332 745 A1**
(43) Date of publication of application: **06.03.2024**
(21) Application number: 22823836.6
(22) Date of filing: 21.03.2022
(51) Int. Cl.: G06F 3/06

(54) **DATA MANAGEMENT METHOD AND APPARATUS, AND STORAGE SPACE MANAGEMENT METHOD AND APPARATUS**

(30) Priority: 18.06.2021 CN 202110681048; 11.08.2021 CN 202110918777
(71) Applicant: Huawei Technologies Co., Ltd., Shenzhen, Guangdong 518129 (CN)
(72) Inventor: PU, Guiyou, Shenzhen, Guangdong 518129 (CN)
(74) Representative: Thun, Clemens
(86) International application number: PCT/CN2022/082038
(87) International publication number: WO 2022/262345

(57) **Abstract**

This application discloses a data management method, and a storage space management method and apparatus, and relates to the field of data storage. A storage system includes storage space that supports append writing, where the storage space includes a first area and a second area. The first area and the second area each include a segment of consecutive addresses of the storage space. While the first area is in a state of being allocated to a first host, the second area is in a state of being allocated to a second host. The data management method includes: The storage system receives a first write request and a second write request, writes first data included in the first write request into the first area, and writes second data included in the second write request into the second area. The storage system only needs to apply for, in a memory of a data storage system, page resources corresponding to a storage space that supports append writing for a plurality of hosts. This reduces memory consumption and improves performance of concurrently writing data by the plurality of hosts.

## Description

This application claims priorities to Chinese Patent Application No. 202110681048.3, filed with the China Intellectual Property Administration on June 18, 2021 and entitled "DATA ACCESS METHOD", and to Chinese Patent Application No. 202110918777.6, filed with the China Intellectual Property Administration on August 11, 2021 and entitled "DATA MANAGEMENT METHOD, AND STORAGE SPACE MANAGEMENT METHOD AND APPARATUS", which are incorporated herein by reference in their entireties.

### TECHNICAL FIELD

This application relates to the field of data storage, and in particular, to a data management method, and a storage space management method and apparatus.

### BACKGROUND

A storage system stores data in a form of log storage. In the log storage, only append writing can be performed, and storage areas in which writing has been completed cannot be modified. These storage areas for storing log write and the data are referred to as persistent logs (Plogs).

Usually, during data writing, a host allocates one or more Plogs in the storage system for data writing. However, when there is a large quantity of hosts, because each host requires the storage system to allocate memory resources that match a storage capacity of a Plog, excessive memory space of the storage system is occupied. As a result, memory space of the storage system is insufficient to meet a requirement of performing concurrent writing by a plurality of hosts, and data write performance of the storage system is affected.

### SUMMARY

This application provides a data management method, and a storage space management method and apparatus, to resolve a problem that data write performance is low because excessive memory space of a storage system is occupied.

To achieve the foregoing objective, the following technical solutions are used in this application.

According to a first aspect, this application provides a data management method. The method may be applied to a storage system, or the method may be applied to a data storage system that may support the storage system in implementing the method. For example, the storage system includes a chip system, and the data management method is performed by the storage system. The storage system includes storage space that supports append writing, the storage space includes a first area and a second area, the first area and the second area each include a segment of consecutive addresses of the storage space, and while the first area is in a state of being allocated to a first host, the second area is in a state of being allocated to a second host. The data management method includes: The storage system receives a first write request and a second write request, writes first data into the first area, and writes second data into the second area. The first write request includes the first data from a first host, and the second write request includes the second data from a second host.

According to the data management method provided in an embodiment of the present invention, the storage system may separately allocate different areas in one storage space (for example, a Plog) to corresponding hosts, in other words, a plurality of areas in one storage space may be simultaneously in a state of being allocated to different hosts. The storage system only needs to allocate memory resources of a storage capacity of one storage space in a memory, to meet a requirement of performing concurrent writing by a plurality of hosts. This reduces memory consumption, and improves performance of concurrently writing data by the plurality of hosts.

In another optional implementation, the data management method further includes: When the second data has been written into the second area, and an area has been allocated before the second area in the storage space has no gap, the storage system sends a write success response to the second host. In the storage space, there is no gap before the second area, and the second data has been written into the second area. Therefore, the storage system considers that a current round of data writing meets append write semantics, and returns the write success response to the second host, so that the second host determines that the second data has been written successfully. This prevents the second host from repeatedly writing the second data into the storage space, and improves data write performance of the storage system.

In another optional implementation, the data management method further includes: When the second data has been written into the second area, and the area that has been allocated before the second area in the storage space has a gap, the storage system returns a write pending response to the second host. The area that has been allocated before the second area in the storage space has a gap, and the second data has been written into the second area. Therefore, the storage system considers that the current round of data writing does not meet the append write semantics, and returns the write pending response to the second host, so that the second host determines that although the second data has been written into the second area, a process of writing the second data is invalid. This prevents the second area from being repeatedly operated, and improves the data write performance of the storage system.

In another optional implementation, that the storage system sends a write success response to the second host includes: The storage system receives a query request from the second host, and returns the write success response to the second host based on the query request. For example, if the storage system has returned the write pending response to the second host, and after specific duration, performs zero padding on the gap in the area that has been allocated before the second area, after receiving the query request of the second host, the storage system may further return the write success response to the second host, so that the second host determines that the second data has been written into the second area, and the process of writing the second data meets the append write semantics.

According to a second aspect, this application provides a storage space management method. The storage space management method is performed by a storage system, or the method may be applied to a storage device that can support a storage system in implementing the method. For example, the storage system includes a chip system, and storage space that supports append writing to obtain a first area and a second area. The first area and the second area each include a segment of consecutive addresses of the storage space. The storage space management method includes: The storage system allocates the first area to a first host; finally, the storage system further allocates the second area to a second host; and while the first area is in a state of being allocated to the first host, the second area is in a state of being allocated to the second host.

In this way, in the storage space management method provided in an embodiment of the present invention, the storage system may divide the storage space that supports append writing into a plurality of areas, and the storage space may be allocated to a plurality of hosts simultaneously. In a process in which the plurality of hosts perform data access, the storage system only needs to open page resources needed by one storage space in a memory, to avoid that each host opens the page resources corresponding to the one storage space in the memory. This reduces page resources needed by the plurality of hosts for data access, reduces memory consumption, and improves performance of concurrently writing data by the plurality of hosts.

With reference to any possible implementation in the second aspect or the first aspect, in an optional implementation, the storage system stores constraint information, and the constraint information indicates a maximum quantity of hosts that can be supported within first duration by the storage space in performing data access. The constraint information stored in the storage system may restrict the maximum quantity of hosts that are supported in writing data into the storage space, to avoid that excessive hosts are supported in writing data into a single storage space, and restrict load quantities of hosts that write data in the single storage space, so that the control node can effectively control a pace of data reading and writing in the storage space in the storage system, to improve data write performance of the storage system.

With reference to any possible implementation in the second aspect or the first aspect, in another optional implementation, before that the storage system receives a first write request, the data management method further includes: The storage system receives a first allocation request from the first host, and allocates the first area to the first host based on the first allocation request. In other words, if receiving the allocation request from the first host, the storage system may allocate a part of areas in the storage space that supports append writing to the first host, and another area in the storage space may be allocated to another host. Further, during data writing, the one storage space in the memory of the storage system may be used by the plurality of hosts. This reduces memory resources needed by each host to perform data access, increases a quantity of hosts that are supported by the memory of the storage system in performing data access, and improves data access performance of the storage system.

With reference to any possible implementation in the second aspect or the first aspect, in another optional implementation, after receiving the first allocation request from the first host, the storage system receives the second allocation request from the second host, and allocates the second area to the second host based on the second allocation request. In other words, when allocating the first area in the storage space to the first host, the storage system may further allocate the second area in the storage space to the second host within the first duration. Further, the one storage space may be used for data access by the plurality of hosts. During data access, the page resources needed by only the one storage space may be opened in the memory of the storage system. This reduces the memory resources needed by the plurality of hosts to perform data access, increases the quantity of hosts that are supported by the memory of the storage system in performing data access, and improves the data access performance of the storage system.

With reference to any possible implementation in the second aspect or the first aspect, in another optional implementation, the storage system may further cancel an allocation relationship between the first area and the first host and an allocation relationship between the second area and the second host. For example, when the first duration is reached, the storage system may cancel allocation relationships between a plurality of areas in the storage space and the plurality of hosts, to avoid that the storage space is still in an open state after being ful written, reduce incorrect write of the plurality of areas by another host, also avoid that the memory of the storage space always opens the page resources corresponding to the storage space, reduce memory consumption, and improve the data access performance of the storage system.

With reference to any possible implementation in the second aspect or the first aspect, in another optional implementation, that the storage system cancels an allocation relationship between the first area and the first host and an allocation relationship between the second area and the second host includes: The storage system performs zero padding on a gap before a third area in the storage space, where the third area is a last area in a plurality of areas successively allocated by the storage space on consecutive addresses to corresponding hosts; and in addition, the storage system further sends a shutdown message to all hosts corresponding to the storage space, where the shutdown message indicates the plurality of areas to stop processing data access, and all the hosts include the first host and the second host. According to the method provided in this embodiment of the present invention, if end time (for example, the first duration) of a current round of data access is reached, the storage system may successively allocate, on consecutive addresses, the storage space to the gap before the last area in the plurality of areas corresponding to hosts for zero padding. Therefore, the process of data writing of the storage space meets the append write semantics. In addition, the storage system may further return the shutdown message to all the hosts corresponding to the storage space, so that all the hosts determine that access of the current round of data of the storage space ends, to avoid endless data access by all hosts to the plurality of areas, and improve the data write performance of the storage system.

With reference to any possible implementation in the second aspect or the first aspect, in another optional implementation, the storage space is a namespace, and the first area and the second area are areas in the namespace.

With reference to any possible implementation in the second aspect or the first aspect, in another optional implementation, the storage space is storage space provided in a shingled magnetic recording disk, and the first area and the second area are areas that are in the storage space and provided in the shingled magnetic recording disk.

There is a physical constraint on a quantity of hosts opened by the namespace or the shingled magnetic recording disk. In this embodiment of the present invention, the one storage space may be used by the plurality of hosts, to increase a quantity of hosts that may be allocated to the namespace or the shingled magnetic recording disk, and improve efficiency of concurrently processing data access by the plurality of hosts and data access performance of the storage system.

According to a third aspect, this application provides a data management apparatus. The data management apparatus includes modules configured to perform the data management method in the first aspect or any one possible implementation of the first aspect.

For beneficial effects, refer to descriptions of any aspect of the first aspect. Details are not described herein again. The data management apparatus has a function of implementing behavior in the method instance in any aspect of the first aspect. The function may be implemented by hardware, or may be implemented by hardware executing corresponding software. For example, the data management apparatus may be used in a storage system or a computing device communicating with a storage system.

The hardware or software includes one or more modules corresponding to the function. In a possible design, the data management apparatus includes: a communication unit, configured to receive a first write request and a second write request; and a data access unit, configured to write first data into a first area, and write a second data into a second area. The first write request includes the first data from the first host, and the second write request includes the second data from the second host. The storage system includes storage space that supports append writing, the storage space includes the first area and the second area, and the first area and the second area each include a segment of consecutive addresses of the storage space. While the first area is in a state of being allocated to a first host, the second area is in a state of being allocated to a second host.

In an optional implementation, the storage system stores constraint information, and the constraint information indicates a maximum quantity of hosts that can be supported within first duration by the storage space in performing data access.

In another optional implementation, the communication unit is further configured to receive a first allocation request from the first host, and the data management apparatus further includes a space allocation unit, where the space allocation unit is configured to allocate the first area to the first host based on the first allocation request.

In another optional implementation, the communication unit is further configured to receive a second allocation request from the second host, and the space allocation unit is further configured to allocate the second area to the second host based on the second allocation request.

In another optional implementation, the data management apparatus further includes: an allocation cancellation unit, where the allocation cancellation unit is configured to cancel an allocation relationship between the first area and the first host and an allocation relationship between the second area and the second host.

In another optional implementation, the allocation cancellation unit is specifically configured to perform zero padding on a gap before a third area in the storage space, and the third area is a last area in a plurality of areas successively allocated by the storage space on consecutive addresses to corresponding hosts; and the allocation cancellation unit is specifically configured to send a shutdown message to all hosts corresponding to the storage space, where the shutdown message indicates the plurality of areas to stop processing data access, and all the hosts include the first host and the second host.

In another optional implementation, the communication unit is further configured to: when the second data has been written into the second area, and an area that has been allocated before the second area in the storage space has no gap, return a write success response to the second host.

In another optional implementation, the communication unit is specifically configured to receive a query request from the second host, and the communication unit is specifically configured to return the write success response to the second host based on the query request.

In another optional implementation, the communication unit is further configured to: when the second data has been written into the second area, and the area has been allocated before the second area in the storage space has a gap, return a write pending response to the second host.

According to a fourth aspect, this application provides a storage space management apparatus. The storage space management apparatus includes modules configured to perform the storage space management method in the second aspect or any possible implementation of the first aspect.

For beneficial effects, refer to descriptions of any aspect of the second aspect. Details are not described herein again. The storage space management apparatus has a function of implementing behavior in the method instance in any aspect of the second aspect. The function may be implemented by hardware, or may be implemented by hardware executing corresponding software. For example, the storage space management apparatus may be used in a storage system.

The hardware or software includes one or more modules corresponding to the function. In a possible design, the storage system includes storage space that supports append writing, the storage space includes a first area and a second area, and the first area and the second area each include a segment of consecutive addresses of the storage space. The storage space management apparatus includes: a first allocation unit, configured to allocate the first area to a first host; and a second allocation unit, further configured to allocate the second area to a second host, where while the first area is in a state of being allocated to the first host, the second area is in a state of being allocated to the second host.

In an optional implementation, the storage system stores constraint information, and the constraint information indicates a maximum quantity of hosts that can be supported within first duration by the storage space in performing data access.

In another optional implementation, the storage space management apparatus further includes: a communication unit, where the communication unit is configured to receive a first allocation request from the first host; and the first allocation unit, specifically configured to allocate the first area to the first host based on the first allocation request.

In another optional implementation, the communication unit is further configured to receive a second allocation request from the second host; and the second allocation unit is specifically configured to allocate the first area to the first host based on the second allocation request.

In another optional implementation, the storage space management apparatus further includes a cancellation unit, where the cancellation unit is configured to cancel an allocation relationship between the first area and the first host and an allocation relationship between the second area and the second host.

In another optional implementation, the cancellation unit is specifically configured to perform zero padding on a gap before a third area in the storage space, and the third area is a last area in a plurality of areas successively allocated by the storage space on consecutive addresses to corresponding hosts; and the cancellation unit is specifically configured to send a shutdown message to all hosts corresponding to the storage space, where the shutdown message indicates the plurality of areas to stop processing data access, and all the hosts include the first host and the second host.

With reference to any possible implementation in the fourth aspect or the third aspect, in another optional implementation, the storage space is a namespace, and the first area and the second area are areas in the namespace.

With reference to any one possible implementation in the fourth aspect or the third aspect, in another optional implementation, the storage space is storage space provided in a shingled magnetic recording disk, and the first area and the second area are areas that are in the storage space and provided in the shingled magnetic recording disk.

According to a fifth aspect, this application provides a data storage system, including the first host, the second host, and the storage system in any one of the foregoing aspects. The storage system includes storage space that supports append writing, where the storage space includes a first area and a second area. The first area and the second area each include a segment of consecutive addresses of the storage space. While the first area is in a state of being allocated to a first host, the second area is in a state of being allocated to a second host.

The storage system receives a first write request and a second write request, writes first data into the first area, and writes second data into the second area. The first write request includes the first data from the first host, and the second write request includes the second data from the second host.

In this way, the storage system may divide the storage space that supports append writing into a plurality of areas, and the storage space may be allocated to a plurality of hosts simultaneously. In a process in which the plurality of hosts perform data access, the storage system only needs to open page resources needed by one storage space in a memory, to avoid that each host opens the page resources corresponding to the one storage space in the memory. This reduces page resources needed by the plurality of hosts for data access, reduces memory consumption, and improves performance of concurrently writing data by the plurality of hosts. In addition, if a quantity of Plogs (such as the storage space that supports append writing) opened by the memory in the storage system remains unchanged, the storage system may concurrently write data of the plurality of hosts into a Plog, and the memory of the storage system may temporarily store cached data of a larger quantity of hosts. This reduces memory consumption when the plurality of hosts write the data into the storage system, and improves efficiency of concurrently writing the data into the storage system.

It should be noted that the data storage system may further implement the method in any possible implementation of the second aspect or the first aspect. For beneficial effects, refer to descriptions of any aspect of the second aspect or the first aspect. Details are not described herein again. The data storage system has a function of implementing behavior in the method instance in any aspect of the second aspect or the first aspect. The function may be implemented by hardware, or may be implemented by hardware executing corresponding software.

According to a sixth aspect, this application provides a storage system, including: a storage and a processor, where the storage is configured to store a group of computer instructions, and when executing the group of computer instructions, the processor implements the method in any aspect of the second aspect or the first aspect.

According to a seventh aspect, this application provides a computer-readable storage medium. The storage medium stores a computer program or instructions, and when the computer program or instructions is/are executed by a processor in a storage system, the method in any aspect of the second aspect or the first aspect is performed.

According to an eighth aspect, this application provides a computer program product. The computer program product includes instructions. When the computer program product is run on a processor in a storage system, the processor in the storage system is enabled to execute the instructions, to implement operation steps of the method in any one of the foregoing aspects or any possible implementation of any one of the foregoing aspects.

According to a ninth aspect, this application provides a chip. The chip includes a logic circuit and an interface circuit. The interface circuit is configured to obtain input information and/or output information. The logic circuit is configured to perform the method in any one of the foregoing aspects or any possible implementation of any one of the foregoing aspects, process and/or generate the output information based on the input information, read/write data, or the like. The chip may be disposed in the storage system in any one of the foregoing aspects.

According to a tenth aspect, this application provides a hard disk, where the hard disk includes a controller and a storage medium, the hard disk provides storage space that supports append writing, the storage space includes a first area and a second area, and the first area and the second area each include a segment of consecutive addresses of the storage space; and the controller is configured to: process access of a first host to the first area; and process access by a second host to the second area, where while the first area is in a state of being allocated to the first host, the second area is in a state of being allocated to the second host.

In a possible example, the storage space is a namespace, and the first area and the second area are areas in the namespace. In another possible example, the hard disk is a shingled magnetic recording disk, the storage space is logical block address space, and the first area and the second area are areas in the logical block address space.

The hard disk provided in this embodiment may divide the storage space that supports append writing into a plurality of areas, and the storage space may be allocated to a plurality of hosts simultaneously. In a process in which the plurality of hosts perform data access, the hard disk only needs to open page resources needed by one storage space in a memory, to avoid that each host opens the page resources corresponding to the one storage space in the memory. This reduces page resources needed by the plurality of hosts for data access, reduces memory consumption, and improves performance of concurrently writing data by the plurality of hosts.

In this application, based on implementations provided in the foregoing aspects, the implementations may be combined to provide more implementations.

### BRIEF DESCRIPTION OF DRAWINGS

FIG. 1 is a schematic diagram of a storage system according to this application;
FIG. 2 is a first schematic diagram of a Plog according to this application;
FIG. 3 is a flowchart of a data management method according to this application;
FIG. 4 is a flowchart of storage space management and data management according to this application;
FIG. 5 is a second schematic diagram of a Plog according to this application;
FIG. 6 is a schematic diagram of a structure of a data management apparatus according to this application; and
FIG. 7 is a schematic diagram of a structure of a storage space management apparatus according to this application.

### DESCRIPTION OF EMBODIMENTS

In this specification, the claims, and the accompanying drawings of this application, the terms "first", "second", "third", and the like are intended to distinguish between different objects but do not limit a particular order.

In embodiments of the present invention, the word "example", "for example", or the like is used to represent giving an example, an illustration, or a description. Any embodiment or design scheme described as "an example" or "for example" in embodiments of the present invention should not be explained as being more preferred or having more advantages than another embodiment or design scheme. Exactly, use of the word "example", "for example", or the like is intended to present a related concept in a specific manner.

For clear and brief description of the following embodiments, a related technology is briefly described first.

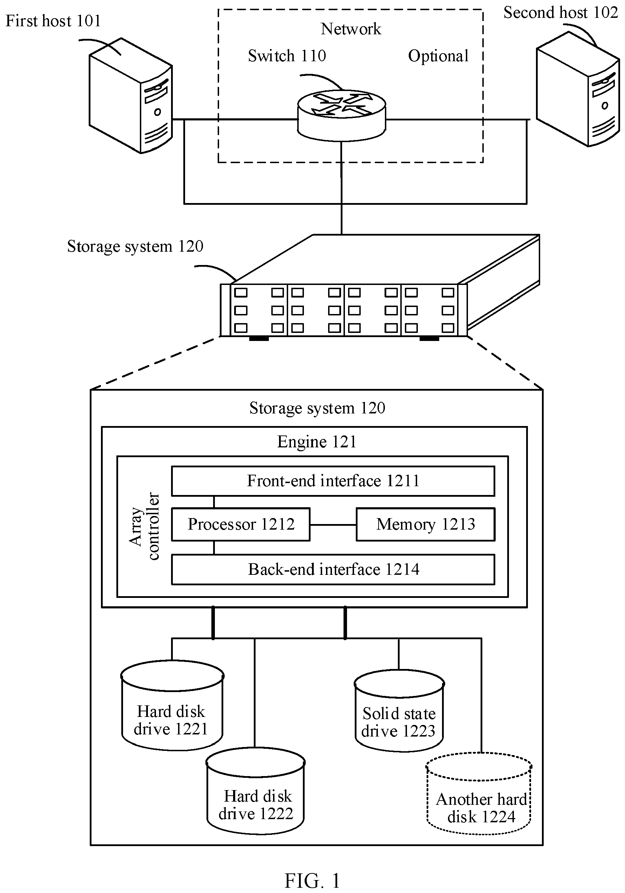

FIG. 1 is a schematic diagram of a storage system according to this application. In an application scenario shown in FIG. 1, a user accesses data by using application programs, and a computer running these application programs may be referred to as a "host", for example, a first host 101 and a second host 102 shown in FIG. 1. The host may be a physical machine, or may be a virtual machine (VM) or a container (container). The physical host includes but is not limited to a desktop computer, a server, a laptop computer, and a mobile device.

In a possible example, the host accesses a storage system 120 via a network to access the data. For example, the network may include a switch 110. In another possible example, the host may alternatively communicate with the storage system 120 by using a wired connection, for example, a universal serial bus (universal serial bus, USB) or a peripheral component interconnect express (PCIe) bus. In another implementation, the host may be run in the storage system.

The data management method provided in this application may be performed by the storage system 120. For example, the storage system 120 may be a centralized storage system or a distributed storage system.

The storage system 120 shown in FIG. 1 may be the centralized storage system. The centralized storage system features a unified portal, and all data from an external device passes through this portal. The portal is an engine 121 of the centralized storage system. The engine 121 is a core component of the centralized storage system, and many advanced functions of the storage system are implemented in the engine 121.

As shown in FIG. 1, the engine 121 may include one or more array controllers. An example in which the engine 121 includes one array controller is used for description in FIG. 1. In a possible example, if the engine 121 includes a plurality of array controllers, a mirror channel may exist between any two array controllers, to implement a function of mutual backup of the any two array controllers. This avoids unavailability of the entire storage system 120 caused by a hardware fault.

The engine 121 further includes a front-end interface 1211 and a back-end interface 1214. The front-end interface 1211 is configured to communicate with the host, to provide a storage service for the host. The back-end interface 1214 is configured to communicate with a hard disk, to expand a capacity of the storage system 120. The engine 121 may connect to more hard disks by using the back-end interface 1214, to form a large storage resource pool.

In terms of hardware, as shown in FIG. 1, the array controller includes at least a processor 1212 and a memory 1213. The processor 1212 is a central processing unit (central processing unit, CPU), configured to process a data access request from outside the storage system 120 (the server or another storage system), and also configured to process a request generated inside the storage system 120. For example, when receiving, by using the front-end interface 1211, data write requests sent by the host, the processor 1212 temporarily stores, in the memory 1213, data in the data write requests. When a total amount of data in the memory 1213 reaches a specific threshold, the processor 1212 sends, by using the back-end interface, the data stored in the memory 1213 to at least one of a hard disk drive 1211, a hard disk drive 1222, a solid state drive (SSD) 1223, or another hard disk 1224 for performing persistent storage.

The memory 1213 is an internal storage that directly exchanges data with the processor. The memory 1213 can read and write the data at a fast speed at any time, and serves as a temporary data storage of an operating system or another running program. The memory includes at least two types of memories. For example, the memory may be a random access memory or a read only memory (Read Only Memory, ROM). For example, the random access memory is a DRAM or an SCM. The DRAM is a semiconductor memory, and is a volatile memory (volatile memory) device like most random access memories (Random Access Memories, RAMs). However, the DRAM and the SCM are merely examples for description in embodiments. The memory may further include another random access memory, for example, a static random access memory (Static Random Access Memory, SRAM). The read only memory may be, for example, a programmable read only memory (Programmable Read Only Memory, PROM) or an erasable programmable read only memory (Erasable Programmable Read Only Memory, EPROM). In addition, the memory 1213 may alternatively be a dual in-line memory module or a dual in-line memory module (Dual In-line Memory Module, DIMM for short), that is, a module composed of a dynamic random access memory (DRAM), or may be an SSD. In actual application, a plurality of memories 1213 and different types of memories 1213 may be configured in the controller. A quantity of and a type of memories 1213 are not limited in embodiments. In addition, the memory 1213 may be configured to have a power failure protection function. The power failure protection function means that data stored in the memory 1213 is not lost even when a system is powered on again after a power failure. A memory with the power failure protection function is referred to as a non-volatile memory.

The memory 1213 stores a software program, and the processor 1212 may run the software program in the memory 1213 to manage the hard disk. For example, the hard disk is abstracted into a storage resource pool, and the storage resource pool is provided for the server in a form of a logical unit number (logical unit number, LUN). The LUN herein is actually the hard disk seen on the server. Certainly, some centralized storage systems are also file servers, and may provide shared file services for the server.

The memory 1213 may alternatively be another memory, and the memory may be configured to store a group of computer instructions. When executing the group of computer instructions, the processor 1212 may implement the data management method and the storage space management method provided in embodiments of the present invention. For example, the another memory may be, but is not limited to, a volatile memory or the non-volatile memory, or may include both a volatile memory and the non-volatile memory. The non-volatile memory may be a ROM, a PROM, an EPROM, an electrically erasable programmable read-only memory (Electrically EPROM, EEPROM), or a flash memory. The volatile memory may be a RAM, and serves as an external cache. For example but not limitation, many forms of RAMs are available, such as an SRAM, the DRAM, a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

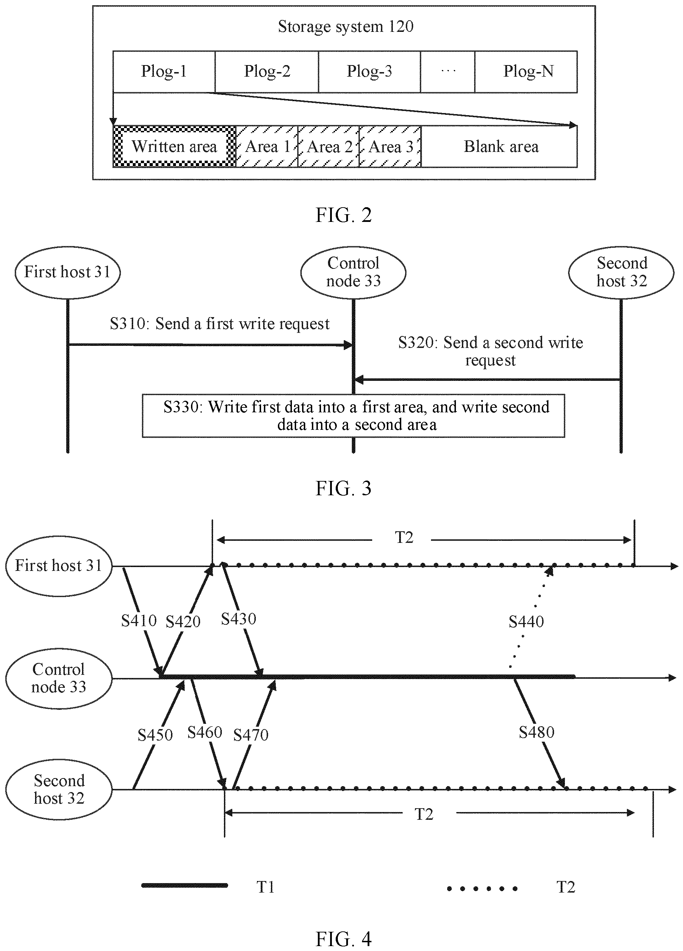

In a possible example, the storage system 120 provided in FIG. 1 may include storage space that supports append writing. FIG. 2 is a first schematic diagram of a Plog according to this application. The storage system 120 may include a plurality of Plogs (for example, Plog-1, Plog-2, Plog-3, ..., and Plog-N). For example, the Plog may provide a data writing service for the storage system 120, and undertake data writing by a host. In an implementation, the Plog provides storage space for a LUN mounted to the host. In another implementation, an area in the Plog is directly mounted to the host, to provide the storage space for the host.

In a first possible example, the storage system 120 is a centralized storage system, and storage space of a plurality of Plogs may be provided by one hard disk, for example, the solid state drive 1223 shown in FIG. 1.

In a second possible example, the storage system 120 is a centralized storage system, and storage space of a plurality of Plogs may be provided by a plurality of hard disks. As shown in FIG. 1, storage space of Plog-1 may be provided by the solid state drive 1223, and storage space of Plog-2 may be provided by the hard disk drive 1222.

In a third possible example, the storage system 120 is a centralized storage system, and storage space of a Plog may be provided by a plurality of hard disks, so that the Plog has a cross-hard disk data protection function, for example, provides data protection by using a multi-copy technology or an erasure coding (Erasure Coding, EC) technology. An EC technology includes a redundant array of independent disks (Redundant Array of Independent Disks, RAID) technology.

In a fourth possible example, the storage system 120 is a centralized storage system, and one hard disk provides one Plog.

The foregoing examples are merely used to describe implementations of the storage space provided by the Plog in the centralized storage system, and should not be construed as a limitation on this application.

For example, the storage system 120 shown in FIG. 1 may alternatively be a distributed storage system. The distributed storage system includes a storage node cluster, the storage node cluster includes one or more storage nodes, and the storage nodes may communicate with each other. The storage node may be a server, a desktop computer, or the like. In terms of hardware, the storage node may include a processor, a memory, a network interface card, and the like. The processor may be a CPU configured to process a data access request.

In a first possible example, if the storage system 120 is the distributed storage system, storage space of a plurality of Plogs may be provided by one storage node in the distributed storage system.

In a second possible example, if the storage system 120 is the distributed storage system, storage space of a plurality of Plogs may be provided by a plurality of storage nodes in the distributed storage system. For example, storage space of Plog-1 is provided by a first storage node in the plurality of storage nodes, and storage space of Plog-2 is provided by a second storage node in the plurality of storage nodes.

In a third possible example, the storage system 120 is the distributed storage system, and storage space of a Plog may be provided by a plurality of storage nodes, so that the Plog has a cross-storage node data protection function, for example, provides data protection by using a multi-copy technology or an EC technology. The EC technology includes a RAID technology.

In a fourth possible example, the storage system 120 is the distributed storage system, and one hard disk provides one Plog.

The foregoing examples are merely used to describe implementations of the storage space provided by the Plog in the distributed storage system, and should not be construed as a limitation on this application.

In addition, FIG. 1 shows only one engine 121. However, in actual application, the storage system may include two or more engines 121, and redundancy or load balancing is performed between two engines 121 or among more than two engines 121.

It should be noted that the Plog is an implementation form of the storage space that supports append writing. FIG. 2 is an example in which the Plog is used to describe the storage space that supports append writing in an embodiment of the present invention.

In an optional implementation, in the data storage system shown in FIG. 1, the engine 121 may not have a disk slot, the hard disk needs to be placed in a disk enclosure, and the back-end interface 1214 communicates with the disk enclosure. The back-end interface 1214 exists in the engine 121 in a form of an adapter card, and one engine 121 may connect to a plurality of disk enclosures by using two or more back-end interfaces 1214. Alternatively, the adapter card may be integrated in a mainboard. In this example, the adapter card may communicate with a processor 1212 by using a PCIe bus.

The disk enclosure includes a control unit and several hard disks. The control unit may have a plurality of forms. In one example, the disk enclosure is an intelligent disk enclosure. For example, the control unit includes a CPU and a memory. The CPU is configured to perform operations such as address translation and data reading and writing. The memory is configured to temporarily store data that is to be written into the hard disk, or data that is read from the hard disk and that is to be sent to a controller. In another example, the control unit is a programmable electronic component, such as a data processing unit (data processing unit, DPU). A DPU has uniformity and programmability of the CPU, but is more specialized, and can be run efficiently on a network data packet, a storage request, or an analysis request. The DPU is distinguished from the CPU by a high degree of parallelism (which requires processing a large quantity of requests). Optionally, the DPU herein may alternatively be replaced with a processing chip such as a graphics processing unit (graphics processing unit, GPU) or an embedded neural-network processing unit (neural-network processing unit, NPU). Usually, a quantity of control units may be one, two, or more than two. A function of the control unit may be offloaded to the network interface card in the disk enclosure of the network interface card. In other words, in this implementation, the disk enclosure inside does not have the control unit, but the network interface card completes the data reading and writing, the address translation, and another computing function. In this example, the network interface card is an intelligent network interface card. The network interface card may include a CPU and a memory. The CPU is configured to perform operations such as the address translation and the data reading and writing. The memory is configured to temporarily store data that is to be written into the hard disk, or data that is read from the hard disk and that is to be sent to a controller. The network interface card may alternatively be a programmable electronic component, for example, the DPU. The network interface card in the disk enclosure does not belong to the hard disk in the disk enclosure. The network interface card can access any hard disk (such as, the hard disk drive 1221, the hard disk drive 1222, the solid state drive 1223, and the another hard disk 1224 shown in FIG. 1) in the disk enclosure, so that expansion of the hard disk is easier when the storage space is insufficient.

Based on a type of a communication protocol between an engine and the disk enclosure, the disk enclosure may be a disk enclosure that supports a serial attached small computer system interface (serial attached small computer system interface, SAS), or may be a disk enclosure that supports a non-volatile memory express (non-volatile memory express, NVMe) interface specification and another type of disk enclosure. An SAS disk enclosure may use an SAS 3.0 protocol. Each enclosure supports 25 SAS hard disks. The engine connects to the disk enclosure by using an onboard SAS interface or an SAS interface module. An NVMe hard disk is inserted into an NVMe disk enclosure that is with an NVMe interface. The NVMe disk enclosure is connected to the engine by using an RDMA interface, or the NVMe disk enclosure is connected to the engine by using the PCIe bus.

The following describes implementations of embodiments of the present invention in detail with reference to the accompanying drawings.

FIG. 3 is a flowchart of a data management method according to this application. A first host 31 in FIG. 3 is configured to implement a function of the first host 101 shown in FIG. 1, a second host 32 is configured to implement a function of the second host 102 shown in FIG. 1, and a control node 33 may implement a processing function of the storage system 120. For example, the control node 33 may be implemented by the array controller in FIG. 1. If the storage system is a distributed storage system, the control node 33 may alternatively be implemented by one or more storage nodes in the distributed storage system. The data management method provided in this embodiment of the present invention includes the following steps S310 to S330.

S310: The first host 31 sends a first write request to the control node 33.

Correspondingly, the control node 33 receives the first write request from the first host 31.

The first write request includes first data from the first host 31. The first write request may be a write I/O request, or may be a log write request, or the like.

S320: The second host 32 sends a second write request to the control node 33.

Correspondingly, the control node 33 receives the second write request from the second host 32.

The second write request includes second data from the second host 32.

The first data and the second data may be but are not limited to service data, a log (log), and the like. The log may be a write ahead log (write ahead log, WAL) that records the service data, a data operation record of a host, or the like.

A plurality of Plogs in the storage system 120 support append write. As shown in FIG. 2, Plog-1 includes a first area (area 1) and a second area (area 2), and the first area and the second area each include a segment of consecutive addresses.

While the first area is in a state of being allocated to the first host, the second area may be in a state of being allocated to the second host. It should be noted that "an area is in a state of being allocated to the host" means that the host may perform data access on the area, and an operation of data access includes a read operation, a write operation, and the like. Therefore, the first area may be referred to as a writable location of the first host 31, and the second area may be referred to as a writable location of the second host 32. In this embodiment of the present invention, the area may be directly allocated to the host, or may be indirectly allocated to the host. For example, if the area is directly allocated to the host, the area may be mounted to the host, in other words, the area is visible to the host. For another example, if the area is indirectly allocated to the host, the area may be allocated to a LUN that is mounted to the host, to provide storage space for the LUN.

In a possible example, Plog-1 further includes a written area, a third area, and a blank area.

The written area is an area in which the service data, the log, a WAL, and the like are already stored in Plog-1.

While the first area is in the state of being allocated to the first host, the third area in Plog-1 is in a state of being allocated to a third host. The third area may include a segment of consecutive addresses.

The blank area is an area in which the service data, the log, the WAL, and the like are not stored in Plog-1, and the area is not allocated by the control node 33 to another host.

It should be noted that locations of areas in FIG. 2 are merely examples provided in this application, and should not be construed as a limitation on this application.

For example, there is no blank area in Plog-1, and a tail area in Plog-1 is the third area.

For another example, there is no third area and blank area in Plog-1, and a tail area in Plog-1 is the second area.

For another example, there is no written area, blank area, and third area in Plog-1, a header area in Plog-1 is the first area, and a tail area in Plog-1 is the second area.

In the data management method provided in this embodiment of the present invention, regardless of whether the Plog includes the written area, the blank area, and the like, a Plog may be in a state of being allocated to at least two hosts. During data writing, especially in a example in which a plurality of hosts concurrently write data, the control node 33 only needs to apply for, in a memory of the storage system, page resources corresponding to a Plog, to avoid that each host needs to apply for page resources needed by a Plog. This reduces memory consumption, and improves performance of concurrently writing the data by the plurality of hosts.

It should be noted that the memory in the storage system may alternatively refer to a memory pool, and the memory pool is obtained by virtualizing one or more memories.

Still refer to FIG. 3. The data management method provided in this embodiment of the present invention further includes the following step S330.

S330: The control node 33 writes the first data into the first area, and writes the second data into the second area.

Compared with a common technology, each host needs memory resources that match a storage capacity of the Plog, resulting in insufficient memory space of the storage system. In the data management method provided in this embodiment of the present invention, the control node 33 only needs to apply for, in the memory of the data storage system, page resources corresponding to a Plog for the plurality of hosts, to avoid that each host needs to apply for page resources needed by a Plog. This reduces the memory consumption, and improves the performance of concurrently writing the data by the plurality of hosts.

In other words, in the data management method provided in this embodiment of the present invention, with a memory capacity unchanged, the storage system may allocate areas for more hosts to write data. This reduces the memory consumption of writing the data by the plurality of hosts into the storage system, and improves efficiency of concurrently writing the data into the storage system.

In addition, the foregoing S310 to S330 are merely a possible example for describing the data management method in this embodiment of the present invention. During performing S330, the control node may further write data of another host (one or more hosts) into Plogs in which the first area and the second area are located.

Herein, an example in which the control node 33 may further write third data of the third host into Plog-1 is used for description. For example, while the first area is in the state of being allocated to the first host, the second area in Plog-1 is in the state of being allocated to the second host, and the third area in Plog-1 is in the state of being allocated to the third host. Therefore, during performing S330, the control node 33 may further write the third data of the third host into the third area.

In a process in which the host writes the data into an allocated area, written data cannot overwrite or exceed the allocated area corresponding to the host. For example, in a process in which the first host writes the first data into the first area, if an amount of data in the first data exceeds storage space of the first area, the control node may further send a full write return code to the first host after the first area is full. The full write return code indicates that the first area is full, so that the first host re-applies to the control node for an area, and remaining data in the first data is written into an area of another Plog or another area in the Plog.

In an optional implementation, to avoid that one Plog is used by excessive hosts to read and write data, the storage system 120 may further store constraint information, and the constraint information indicates a maximum quantity of hosts that can be supported within first duration by the storage space in performing data access. For example, the constraint information may be represented in a form of a table.

In a possible example, constraint information of the plurality of Plogs in the storage system 120 may be the same, and maximum quantities of hosts that are supported in writing the data into each Plog are also the same. The constraint information of the plurality of Plogs shown in FIG. 2 may be shown in Table 1.

**Table 1**

| Plog | Constraint information |
|---|---|
| Plog-1 | 3 |
| Plog-2 | 3 |
| Plog-3 | 3 |
| ··· | ··· |
| Plog-N | 3 |

Each of the plurality of Plogs (Plog-1 to Plog-N) in the storage system 120 may be used by three hosts.

In a second possible example, the constraint information of the plurality of Plogs in the storage system 120 may be different, and the maximum quantities of hosts that are supported in writing the data into each Plog are also different. The constraint information of the plurality of Plogs shown in FIG. 2 may be shown in Table 2.

**Table 2**

| Plog | Constraint information |
|---|---|
| Plog-1 | 3 |
| Plog-2 | 4 |
| Plog-3 | 5 |
| ··· | ··· |
| Plog-N | N+2 |

A maximum quantity of hosts that are supported in writing the data into Plog-1 is 3, a maximum quantity of hosts that are supported in writing the data into Plog-2 is 4, a maximum quantity of hosts that are supported in writing the data into Plog-3 is 5, and a maximum quantity of hosts that are supported in writing the data into Plog-N is N+2.

In a third possible example, maximum quantities of hosts that are supported in writing the data into the plurality of Plogs in the storage system 120 may alternatively be determined based on sequence numbers or identifiers of the Plogs. For example, a maximum quantity of hosts that are supported in writing the data into an odd-numbered Plog (for example, Plog-1 and Plog-3) is 3, and a maximum quantity of hosts that are supported in writing the data into an even-numbered Plog (for example, Plog-2 and Plog-4) is 4.

The foregoing three possible examples are merely possible examples provided in this embodiment of the present invention for describing the constraint information. Alternatively, the constraint information may be determined based on a storage capacity corresponding to consecutive addresses included in each storage space.

In this way, the constraint information stored in the storage system may restrict the maximum quantity of hosts that are supported in writing data into the storage space, to avoid that excessive hosts are supported in writing data into a single storage space, and restrict load quantities of hosts that write data in the single storage space, so that the control node can effectively control a pace of data reading and writing in the storage space in the storage system, to improve data write performance of the storage system.

In addition, the storage system may divide the storage space that supports the append writing into a plurality of areas, and the storage space may be allocated to a plurality of hosts simultaneously. Therefore, in a process in which the plurality of hosts perform data access, the storage system only needs to open page resources needed by one storage space in the memory, to avoid that each host opens page resources corresponding to one storage space in the memory. This reduces page resources needed by the plurality of hosts for data access, reduces the memory consumption, and improves the performance of concurrently writing the data by the plurality of hosts.

To determine an area in which the plurality of hosts write the data into the Plog, an embodiment of the present invention provides an optional implementation. FIG. 4 is a flowchart of storage space management and data management according to this application. The data management method includes the following steps S410 to S440.

S410: The first host 31 sends a first allocation request to the control node 33.

Correspondingly, the control node 33 receives the first allocation request from the first host 31.

The first host 31 applies to the storage system 120 for storage space for persistent storage. The first allocation request indicates the control node 33 to allocate a storage capacity of an area to the first host 31.

In a possible example, the storage capacity of the area indicated by the first allocation request is greater than or equal to storage space actually needed by the first host 31 in a current round of data writing, to meet a requirement of performing a plurality of times of writing by the first host 31, and improve data write performance of the storage system 120.

In a first possible example, the storage capacity of the area indicated by the first allocation request may be fixed, for example, 512 kilobytes (kilobytes, KB).

In a second possible example, the storage capacity of the area indicated by the first allocation request may alternatively be estimated and determined by the first host 31 based on write performance of the first host 31. If a write speed of the first host 31 is high within specific duration, the storage capacity of the area may be 1 megabyte (megabyte, MB). If a write speed of the first host 31 is low within specific duration, the storage capacity of the area may be 64 KB.

It should be noted that the foregoing two possible examples are merely examples provided in this embodiment of the present invention for describing the first allocation request, and should not be construed as a limitation on this application.

After receiving the first allocation request, the control node 33 may allocate a first area to the first host based on the first allocation request. In other words, if receiving the allocation request from the first host, the storage system may allocate one or more areas in storage space that supports append writing to the first host, and another area of the storage space may be allocated to another host.

In this way, during data writing, one storage space in a memory of the storage system may be used by a plurality of hosts. This reduces memory resources needed by each host to perform data access, increases a quantity of hosts that are supported by the memory of the storage system in performing data access, and improves data access performance of the storage system.

S420: The control node 33 sends a first message to the first host based on the first allocation request.

The first message indicates to allocate the first area to the first host.

It should be noted that a storage capacity corresponding to the first area may be equal to the storage capacity indicated by the first allocation request, or a storage capacity corresponding to the first area may be greater than the storage capacity indicated by the first allocation request.

In a possible example, the first message includes an LBA indicated by the first area, so that the first host 31 reads and writes data based on the LBA indicated by the first area. In this embodiment of the present invention, the first message may further include another piece of information that indicates the first area, for example, a start address of the first area. This is not limited in this embodiment of the present invention.

S430: The first host 31 sends a first write request to the control node 33.

For a specific process of S430, refer to the descriptions of S310.

In addition, after receiving the first message, the first host 31 may perform timing, for example, T2 (second duration) shown in FIG. 4. Within T2, the first host 31 may write data into the first area.

S440: The control node 33 returns a first write response to the first host 31.

In a first possible example, when the first data has been written into the first area, and an area that has been allocated before the first area in the storage space has no gap, the storage system sends a write success response (the first write response) to the first host. A gap is a blank area in which no data is stored in an area of the storage space, or is referred to as a vacant storage bit (bit). That "the area that has been allocated before the first area in the storage space has no gap" means that the area that has been allocated before the first area has no blank area, in other words, each storage bit in the area is padded with data (for example, 0 and 1). As shown in FIG. 2, if each storage bit in the written area before the area 1 is padded with the data, and the first data included in the first write request has been written into the area 1, the control node 33 may return the write success response to the first host 31.

The area that has been allocated before the first area in the storage space has no gap, and the first data has been written into the first area. Therefore, the storage system determines that the first host in the current round of data writing meets append write semantics, and returns the write success response to the first host, so that the first host determines that the first data has been written successfully. This prevents the first host from repeatedly writing the first data into the storage space, and improves data write performance of the storage system.

For example, the append write semantics means that during log storage, the storage system writes the data into the storage space in an append write (append write) manner, and cannot further modify an area in which writing is completed, to ensure data consistency. During the log storage, even an error occurs at a location at which data is being written, it may be easy to roll back to a time point at which data is in consistency.

In a second possible example, if the first data has been written into the first area, and an area that has been allocated before the first area in the storage space has a gap, the storage system returns a write pending response (the first write response) to the first host. As shown in FIG. 2, if at least one storage bit in the written area before the area 1 is not padded with data, and the first data included in the first write request has been written into the area 1, the control node 33 may return the write pending response to the first host 31.

The area that has been allocated before the first area in the storage space has a gap, and the first data has been written into the first area. Therefore, the storage system determines that the first host in the current round of data writing does not meet append write semantics, and returns the write pending response to the first host. This prevents the first host from repeatedly writing the first data into the storage space, and improves data write performance of the storage system.

In this way, the control node 33 may allocate the first area in the Plog to the first host based on the first allocation request of the first host 31, so that the first host 31 writes the data into the first area. After writing the first data included in the first write request into the first area, the control node 33 may further return the first write response to the first host 31, so that the first host 31 determines that the first data has been written into the first area. This prevents the first host 31 from repeatedly writing the data into the first area, and improves the data write performance of the storage system 120.

In an optional implementation, after receiving the first allocation request, the control node 33 may further perform timing, for example, T1 (first duration) shown in FIG. 4. T1 is duration of a current round of data writing in a Plog corresponding to the first area in the storage system 120. Still refer to FIG. 4. After the control node 33 receives the first allocation request of the first host 31, the data management method provided in this embodiment of the present invention may further include the following steps S450 to S480.

S450: The control node 33 receives a second allocation request from a second host 32.

As shown in FIG. 4, in an implementation, within T1, the control node 33 may continue to receive the second allocation request from the second host 32, to allocate a writable location in the Plog to the second host 32 based on the second allocation request. For more detailed content of the second allocation request, refer to related descriptions of the first allocation request. Details are not described herein again.

When the storage system allocates the first area in the storage space to the first host, after receiving the second allocation request within the first duration, the control node 33 may allocate the second area to the second host based on the second allocation request. In other words, the storage system may further allocate the second area in the storage space to the second host within the first duration. Further, one storage space may be used for data access by the plurality of hosts. During data access, page resources needed by only the one storage space may be opened in the memory of the storage system. This reduces the memory resources needed by the plurality of hosts to perform data access, improves a capability of the memory of the storage system that can be used by the host to perform data access, and improves the data access performance of the storage system.

S460: The control node 33 sends a second message to the second host 32 based on the second allocation request.

Correspondingly, the second host 32 receives the second message from the control node 33.

The second message indicates to allocate the second area to the second host.

As shown in FIG. 2, if Plog-1 is allocated to two hosts for use in the current round of data writing in the storage system 120, consecutive addresses included in the second area may be consecutive to the consecutive addresses included in the first area.

S470: The second host 32 sends a second write request to the control node 33.

Correspondingly, the control node 33 receives the second write request from the second host 32.

For a specific process of S470, refer to the descriptions of S320.

In addition, after receiving the second message, the second host 32 may perform timing, for example, T2 (second duration) shown in FIG. 4. Within T2, the second host 32 may write data into the second area.

S480: The control node 33 returns a second write response to the second host 32.

In a possible example, when second data has been written into the second area, and there is no gap before the second area in the storage space, the storage system sends a write success response (the second write response) to the second host. As shown in FIG. 2, when neither the written area nor the area 1 has a vacant storage bit, the control node 33 may determine that there is no gap before the area 2 in Plog-1. In addition, when the second data included in the second write request has been written into the area 2, the control node 33 may return the write success response (the second write response) to the second host 32.

An area that has been allocated before the second area in the storage space has no gap, and the second data has been written into the second area. Therefore, the storage system determines that the current round of data writing meets append write semantics, and returns the write success response to the second host, so that the second host determines that the second data has been written successfully. This prevents the second host from repeatedly writing the second data into the storage space, and improves data write performance of the storage system.

In another possible example, if second data has been written into the second area, and an area that has been allocated before the second area in the storage space has a gap, the storage system returns a write pending response (the first write response) to the second host. As shown in FIG. 2, when at least one of the written area and the area 1 has a vacant storage bit, the control node 33 may determine that there is a gap before the area 2 in Plog-1. In addition, when the second data included in the second write request has been written into the area 2, the control node 33 may return the write pending response (the second write response) to the second host 32.

An area that has been allocated before the second area in the storage space (for example, Plog-1) has a gap, and the second data has been written into the second area. Therefore, the storage system determines that the current round of data writing does not meet append write semantics, and returns the write pending response to the second host, so that the second host determines that although the second data has been written into the second area, a process of writing the second data is invalid. This prevents the second area from being repeatedly operated, and improves the data write performance of the storage system.

It should be noted that if the storage system (the control node 33) has returned the write pending response to the second host, and after specific duration, performs zero padding on the gap in the area that has been allocated before the second area, after receiving a query request of the second host, the storage system may further return the write success response to the second host, so that the second host determines that the second data has been written into the second area, and the process of writing the second data meets the append write semantics. For example, if the second host 32 first receives the write pending response, within T2, the second host 32 may further send the query request to the control node 33. If the control node 33 determines that there is no gap between the first data and the second area, the control node 33 may further return the write success response to the second host 32 based on the query request.

In other words, after receiving the write pending response, the second host 32 may actively query the control node 33 whether the second data is written successfully. If the control node 33 determines that there is no gap between the first data and the second area, and the second data has been written into the second area, the control node 33 may return the write success response to the second host 33, so that the second host 33 determines that the second data is written successfully and the second area meets the append write semantics.

The area that has been allocated before the second area in the storage space has the gap, and the second data has been written into the second area. Therefore, the storage system determines that the current round of data writing does not meet the append write semantics, and returns the write pending response to the second host, so that the second host determines that although the second data has been written into the second area, the process of writing the second data is invalid. This prevents the second area from being repeatedly operated, and improves the data write performance of the storage system.

In addition, if the second host 33 does not actively query the control node 33 whether the second data is written successfully, the second host 32 may further determine, after receiving the write pending response, that the second data is written successfully if a timing time (T2 shown in FIG. 4) is reached.

It should be noted that to avoid that the second host 32 incorrectly determines whether the second data is written successfully, the control node 33 may further control magnitudes of T1 and T2, for example, set T2 to be greater than or equal to T1. In addition, because time at which the second host 32 starts to write the second data into the second area is later than time at which the control node 33 receives the second allocation request, end time of T2 is later than end time of T1. This prevents the second host 32 from incorrectly determining that the second data has been written successfully into the second area, and prevents another host from performing an operation on the second area within T2, to improve the data write performance of the storage system 120.

In an optional implementation, after the first duration, the control node 33 may cancel an allocation relationship between the first area and the first host and an allocation relationship between the second area and the second host. In other words, the control node 33 shuts down a process of writing data in a Plog in which the first area is located. Data writing includes a process in which the control node 33 allocates an area in the Plog to a host, and a process in which the host writes data to the area in the Plog.

In this way, when the first duration is reached, the storage system may cancel an allocation relationship between an area in the storage space and the host, to avoid that the storage space is still in an open state after being full, avoid that the memory of the storage space always opens the page resources corresponding to the storage space, reduce memory consumption, and improve the data access performance of the storage system. For example, the control node 33 may cancel the allocation relationship between the first area and the first host and the allocation relationship between the second area and the second host based on the first duration after the first allocation request is received. This helps the control node 33 implement matching between area allocation time and data writing time of the storage system. This prevents the memory in the storage system 120 from maintaining a cache of the Plog for a long time, to reduce memory occupation in the storage system 120, and improve data write performance of the storage system 120.

In a possible example, that the control node 33 cancels the allocation relationship between the first area and the first host and the allocation relationship between the second area and the second host may include: The control node 33 performs zero padding on a gap before a third area in the storage space, and sends a shutdown message to all hosts corresponding to the storage space.

The third area is a last area, such as an area 3 shown in FIG. 2, in a plurality of areas successively allocated by the storage space on consecutive addresses to corresponding hosts.

In addition, the shutdown message indicates the plurality of areas to stop processing data access, and all the hosts include the first host and the second host.

For example, the control node 33 performs zero padding on the gap before the third area in the Plog, where the third area may include a last segment of consecutive addresses that are allocated in the current round of data writing and that are in the Plog in which the first area is located. The control node 33 further sends a third message to all hosts corresponding to allocated areas in the Plog, where the third message indicates the allocated areas to stop processing data access, and all the hosts include the first host, the second host, and the third host that corresponds to the third area.

According to the method provided in this embodiment of the present invention, if end time (for example, the first duration) of a current round of data access is reached, the storage system may successively allocate, on consecutive addresses, the storage space to a gap before the last area in the plurality of areas corresponding to hosts for zero padding. Therefore, the process of data writing of the storage space meets the append write semantics. In addition, the storage system may further return the shutdown message to all the hosts corresponding to the storage space, so that all the hosts determine that the current round of data access of the storage space ends, to release memory resources corresponding to the storage system, and improve the data write performance of the storage system.

Specifically, first, because the Plog stores the data in a log storage form, storage addresses in the Plog are consecutive. Because the first area serves as the first area in the Plog, the area before the first area has no gap. Second, because the third area includes the last consecutive address allocated in the current round of data writing in the Plog in which the first area is located, the third area is a last area in the current round of data writing. Finally, the control node performs a zero padding operation on the gap before the third area, so that all allocated areas before the third area in the Plog are padded with data, to implement append write semantics of the Plog.

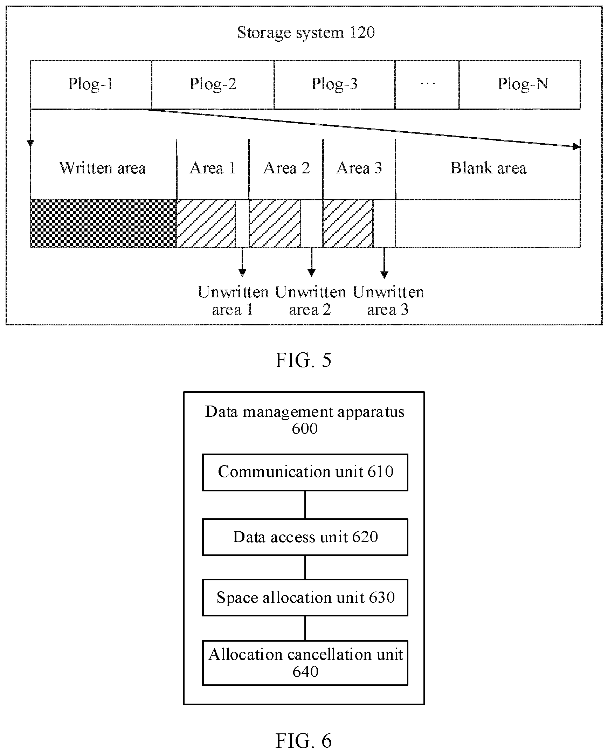

For the control node 33 that cancels the allocation relationship between the first area and the first host and the allocation relationship between the second area and the second host, based on FIG. 2, an embodiment of the present invention provides a possible specific implementation. FIG. 5 is a second schematic diagram of a Plog according to this application. FIG. 5 shows a write situation in which a control node 33 allocates three areas of Plog-1 to three hosts during data writing.

An area 1 (a first area) includes an area in which a first data from a first host has been written, and an area in which no data is written (an unwritten area 1 as shown in FIG. 5).

An area 2 (a second area) includes an area in which a second data from a second host has been written, and an area in which no data is written (an unwritten area 2 as shown in FIG. 5).

An area 3 (a third area) includes an area in which a third data from a third host has been written, and an area in which no data is written (an unwritten area 3 as shown in FIG. 5).

The control node 33 may determine whether data of each host is written successfully. For example, in the area 1 shown in FIG. 5, when the first data has been written into the area 1, because a written area before the area 1 in Plog-1 has been padded with data (where there is no gap between the first data and the written area), the control node 33 determines that the first data from the first host has been written successfully, and may further return a write success response to the first host 31.

For another example, in the area 2 shown in FIG. 5, when the second data has been written into the area 2, because there is a gap (the unwritten area 1) before the area 2 in Plog-1, in other words, the area 2 cannot meet append write semantics of Plog-1, the control node 33 may return a write pending response to the second host 32, and the second host 32 determines, based on the write pending response, that the second data from the second host has been written into the area 2, but a process of writing the second data has not ended. The area 3 is similar to the area 2. Details are not described again.

When data has been written into an allocated area, because the control node may determine whether there is a gap (an unwritten area) between the allocated area and a previous area in the Plog, further determine whether the Plog meets the append write semantics, and perform zero padding on the gap (the unwritten area). A location before the allocated area is not modified. This meets the append write semantics of the Plog.

In addition, if further receiving a request of any host to write data into an area that is in the area 1 to the area 3 and in which data has been written, the control node 33 returns a message to the host, where the message indicates that the area in which the data has been written is full and information cannot be written. In this way, the storage system can write data only in the allocated area, to avoid that another host damages areas (the area 1 to the area 3) in which concurrent writing is performed, and improve data write performance of the storage system.

Still refer to FIG. 5. After first duration is reached, the control node may further perform zero padding on an allocated area of Plog-1. However, in an actual process of zero padding, zero padding may not be performed on a tail area (the area 3) in the allocated area. During data writing subsequently, data may be immediately written into the tail area in the allocated area. Therefore, zero padding is not performed on the area 3, and the append write semantics of Plog-1 is not affected. In addition, because zero padding does not need to be performed on the area 3, storage resource consumption in Plog-1 can further be reduced, and storage resource utilization of the storage system can be increased.

It may be understood that, to implement the functions in the foregoing embodiments, the storage system includes a corresponding hardware structure and/or software module for performing each function. A person skilled in the art should be easily aware that in combination with the units and the method steps in the examples described in embodiments disclosed in this application, this application can be implemented by using hardware or a combination of hardware and computer software. Whether a specific function is performed by using the hardware or hardware driven by the computer software depends on particular application scenarios and design constraints of the technical solutions.

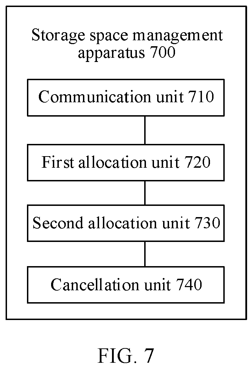

FIG. 6 and FIG. 7 are possible schematic diagrams of structures of a data management apparatus and a storage space management apparatus according to an embodiment of this application. These apparatuses may be configured to implement the functions of the storage system in the foregoing method embodiments, and therefore can also implement beneficial effects of the foregoing method embodiments. In this embodiment of this application, the data management apparatus and the storage space management apparatus may be the storage system 120 shown in FIG. 1, or may be a control node used in a storage system.

FIG. 6 is a schematic diagram of a structure of a data management apparatus according to this application. The data management apparatus 600 includes a communication unit 610, a data access unit 620, a space allocation unit 630, and an allocation cancellation unit 640. The data management apparatus 600 may implement functions of the control node 33 or the storage system 120 shown in FIG. 3 to FIG. 5. It should be understood that division of the structure and functional units of the data management apparatus 600 is only an example this embodiment, but specific division of the structure and functional units of the data management apparatus 600 is not limited in this application.

When the data management apparatus 600 is configured to implement a function of the control node 33 in the method embodiment shown in FIG. 3, the communication unit 610 is configured to perform S310 and S320, and the data access unit 620 is configured to perform S320.

When the data management apparatus 600 is configured to implement a function of the control node 33 in the method embodiment shown in FIG. 4, the communication unit 610, the data access unit 620, the space allocation unit 630, and the allocation cancellation unit 640 are configured to collaboratively perform S410 to S480.

For example, the space allocation unit 630 may allocate a first area to a first host, and allocate a second area to a second host. The allocation cancellation unit 640 may cancel an allocation relationship between the first area and the second area.

It should be understood that the data management apparatus 600 in this embodiment of the present invention may be implemented by using an application-specific integrated circuit (Application Specific Integrated Circuit, ASIC), or a programmable logic device (programmable logic device, PLD). The PLD may be a complex programmable logic device (complex programmable logic device, CPLD), a field programmable gate array (Field Programmable Gate Array, FPGA), generic array logic (generic array logic, GAL), or any combination thereof. When the data management methods shown in FIG. 3 to FIG. 5 are implemented by using software, the data management apparatus 600 and each unit thereof may also be software units.

In an optional implementation, the data management apparatus 600 may further include a storage unit, and the storage unit may be configured to store the foregoing constraint information.

For more detailed descriptions of the data management apparatus 600, directly refer to related descriptions in embodiments shown in FIG. 3 to FIG. 5. Details are not described herein again.

FIG. 7 is a schematic diagram of a structure of a storage space management apparatus according to this application. The storage space management apparatus 700 includes a communication unit 710, a first allocation unit 720, a second allocation unit 730, and a cancellation unit 740. The storage space management apparatus 700 may implement functions of the control node 33 or the storage system 120 shown in FIG. 3 to FIG. 5. It should be understood that division of the structure and functional units of the storage space management apparatus 700 is only an example this embodiment, but specific division of the structure and functional units of the storage space management apparatus 700 is not limited in this application.

When the storage space management apparatus 700 is configured to implement a function of the control node 33 in the method embodiment shown in FIG. 4, the communication unit 710, the first allocation unit 720, the second allocation unit 730, and the cancellation unit 740 are configured to collaboratively perform S410 to S480 and a possible implementation thereof.

For example, the first allocation unit 720 may allocate a first area to a first host, and the second allocation unit 730 may allocate a second area to a second host. The cancellation unit 740 may cancel an allocation relationship between the first area and the first host and an allocation relationship between the second area and the second host.

It should be understood that the storage space management apparatus 700 in this embodiment of the present invention may be implemented by using an ASIC or a PLD. The PLD may be a CPLD, an FPGA, GAL, or any combination thereof. When the methods shown in FIG. 3 to FIG. 5 are implemented by using software, the storage space management apparatus 700 and each unit thereof may also be software units.

In an optional implementation, the storage space management apparatus 700 may further include a storage unit, and the storage unit may be configured to store the foregoing constraint information. For more detailed descriptions of the storage space management apparatus 700, directly refer to related descriptions in embodiments shown in FIG. 3 to FIG. 5. Details are not described herein again.

In the foregoing embodiments of the present invention, the storage space that supports append writing is the Plog. In another embodiment of the present invention, the storage space that supports append writing may alternatively be storage space provided in a shingled magnetic recording (shingled magnetic recording, SMR) disk. In the SMR disk, tracks on a platter of the SMR disk are organized in a shingled arrangement, to increases storage density of the SMR disk. However, a writing head positioned on a track is larger than that of another standard disk, in other words, a quantity of tracks spanned by the writing head is changed from one to more on the standard disk. In a example of a same volume, because the density of the SMR disk increases, a storage capacity of the SMR disk increases, so that more data can be stored. The SMR disk includes a controller and a storage medium. The controller controls a motor to move the head to access a corresponding track of the storage medium.

The SMR disk divides the tracks into several bands (Bands), that is, consecutive writable areas including consecutive tracks. Each area includes a basic unit in which writing needs to be performed sequentially. A band is a physical concept on the SMR disk. A logical concept of the band is a zone (zone). The area is a sequential write area of an SMR disk that can be accessed by a host. A size of a zone is usually 256 MB. Therefore, in the embodiment in which the SMR provides the storage space, an area in the storage space is a logical area corresponding to the band of the SMR disk.

In the foregoing embodiments of the present invention, the storage space that supports append writing is the storage space provided by the Plog or the SMR disk. In another embodiment of the present invention, the storage space may alternatively be a namespace (namespace) provided by an SSD that supports a zoned namespace (zoned namespace, ZNS). The ZNS SSD divides logical address space of a namespace into zones. Basic operations of a zone include read (read), append write (append write), zone management (zone management), and get log page (get log page). In addition, data is written sequentially in each zone. A first area and a second area are zones in the namespace. The SSD includes a controller and a storage medium, and the storage medium may be a flash memory. The controller is configured to perform data access to the SSD.

For specific implementations related to the two embodiments of the SMR disk and the ZNS SSD, refer to the descriptions of the foregoing embodiment related to the Plog. Details are not described herein again in the present invention.

It may be understood that a processor in this embodiment of this application may be a CPU, an NPU, or a GPU, or may be another general-purpose processor, a digital signal processor (Digital Signal Processor, DSP), an ASIC, an FPGA, or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions include a corresponding software module. The software module may be stored in a RAM, a flash memory, a ROM, a PROM, an EPROM, an EEPROM, a register, a hard disk, a removable hard disk, a CD-ROM, or a storage medium of any other form known in the art. For example, the storage medium is coupled to the processor, so that the processor can read information from the storage medium and write information into the storage medium. Certainly, the storage medium may be a component of the processor. The processor and the storage medium may be disposed in the ASIC. In addition, the ASIC may be disposed in a storage device. Certainly, the processor and the storage medium may exist in the storage device as discrete components.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer programs and instructions. When the computer program or instructions is/are loaded and executed on a computer, all or a part of the procedures or functions in embodiments of the present invention are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired manner or in a wireless manner. The computer-readable storage medium may be any usable medium that can be accessed by the computer, or a data storage device, such as the server or the data center, integrating one or more usable media. The usable medium may be a magnetic medium, for example, a floppy disk, a hard disk, or a magnetic tape, an optical medium, for example, a digital video disc (digital video disc, DVD), or a semiconductor medium, for example, an SSD.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more than two. The term "and/or" describes an association relationship between associated objects, and represents that three relationships may exist. For example, A and/or B may represent the following examples: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data management method, wherein the method is performed by a storage system, and the method comprises:
receiving a first write request and a second write request, wherein the first write request comprises first data from a first host, the second write request comprises second data from a second host, the storage system comprises storage space that supports append writing, the storage space comprises a first area and a second area, the first area and the second area each comprise a segment of consecutive addresses of the storage space, and while the first area is in a state of being allocated to the first host, the second area is in a state of being allocated to the second host; and
writing the first data into the first area, and writing the second data into the second area.

2. The method according to claim 1, wherein the storage system stores constraint information, and the constraint information indicates a maximum quantity of hosts that can be supported within first duration by the storage space in performing data access.

3. The method according to claim 1 or 2, wherein before the receiving a first write request, the method further comprises:
receiving a first allocation request from the first host; and
allocating the first area to the first host based on the first allocation request.

4. The method according to claim 3, wherein after the receiving a first allocation request from the first host, the method further comprises:
receiving a second allocation request from the second host; and
allocating the second area to the second host based on the second allocation request.

5. The method according to any one of claims 1 to 4, wherein the method further comprises:
cancelling an allocation relationship between the first area and the first host and an allocation relationship between the second area and the second host.

6. The method according to claim 5, wherein the cancelling an allocation relationship between the first area and the first host and an allocation relationship between the second area and the second host comprises:
performing zero padding on a gap before a third area in the storage space, wherein the third area is a last area in a plurality of areas successively allocated by the storage space on consecutive addresses to corresponding hosts; and
sending a shutdown message to all hosts corresponding to the storage space, wherein the shutdown message indicates the plurality of areas to stop processing data access, and all the hosts comprise the first host and the second host.

7. The method according to any one of claims 1 to 6, wherein the method further comprises:
when the second data has been written into the second area, and an area that has been allocated before the second area in the storage space has no gap, returning a write success response to the second host.

8. The method according to claim 7, wherein the returning a write success response to the second host comprises:
receiving a query request from the second host; and
returning the write success response to the second host based on the query request.

9. The method according to any one of claims 1 to 8, wherein the method further comprises:
when the second data has been written into the second area, and the area that has been allocated before the second area in the storage space has a gap, returning a write pending response to the second host.

10. The method according to any one of claims 1 to 9, wherein the storage space is a namespace, and the first area and the second area are areas in the namespace.

11. The method according to any one of claims 1 to 9, wherein the storage space is storage space provided in a shingled magnetic recording disk, and the first area and the second area are areas in the storage space provided in the shingled magnetic recording disk.

12. A storage space management method, wherein the method is performed by a storage system, storage space that supports append writing and that is in the storage system comprises a first area and a second area, and the first area and the second area each comprise a segment of consecutive addresses of the storage space, and the method comprises:
allocating the first area to a first host; and
allocating the second area to a second host, wherein while the first area is in a state of being allocated to the first host, the second area is in a state of being allocated to the second host.

13. The method according to claim 12, wherein the storage system stores constraint information, and the constraint information indicates a maximum quantity of hosts that can be supported within first duration by the storage space in performing data access.

14. The method according to claim 11 or 12, wherein the allocating the first area to a first host comprises:
receiving a first allocation request from the first host; and
allocating the first area to the first host based on the first allocation request.

15. The method according to any one of claims 12 to 14, wherein the allocating the second area to a second host comprises:
receiving a second allocation request from the second host; and
allocating the first area to the first host based on the second allocation request.

16. The method according to any one of claims 12 to 15, wherein the method further comprises:
cancelling an allocation relationship between the first area and the first host and an allocation relationship between the second area and the second host.

17. The method according to claim 16, wherein the cancelling an allocation relationship between the first area and the first host and an allocation relationship between the second area and the second host comprises:
performing zero padding on a gap before a third area in the storage space, wherein the third area is a last area in a plurality of areas successively allocated by the storage space on consecutive addresses to corresponding hosts; and
sending a shutdown message to all hosts corresponding to the storage space, wherein the shutdown message indicates the plurality of areas to stop processing data access, and all the hosts comprise the first host and the second host.

18. The method according to any one of claims 12 to 17, wherein the storage space is a namespace, and the first area and the second area are areas in the namespace.

19. The method according to any one of claims 12 to 17, wherein the storage space is logical block address space in a shingled magnetic recording disk, and the first area and the second area are areas in the logical block address space.

20. A data management apparatus, wherein the data management apparatus is used in a storage system, and the apparatus comprises:
a communication unit, configured to receive a first write request and a second write request, wherein the first write request comprises first data from a first host, the second write request comprises second data from a second host, the storage system comprises storage space that supports append writing, the storage space comprises a first area and a second area, the first area and the second area each comprise a segment of consecutive addresses of the storage space, and while the first area is in a state of being allocated to the first host, the second area is in a state of being allocated to the second host; and
a data access unit, configured to write the first data into the first area, and write the second data into the second area.

21. The apparatus according to claim 20, wherein the storage system stores constraint information, and the constraint information indicates a maximum quantity of hosts that can be supported within first duration by the storage space in performing data access.

22. The apparatus according to claim 20 or 21, wherein the communication unit is further configured to receive a first allocation request from the first host, and
the data management apparatus further comprises a space allocation unit, wherein
the space allocation unit is configured to allocate the first area to the first host based on the first allocation request.

23. The apparatus according to any one of claims 20 to 22, wherein the communication unit is further configured to receive a second allocation request from the second host, and
the space allocation unit is further configured to allocate the second area to the second host based on the second allocation request.

24. The apparatus according to any one of claims 20 to 23, wherein the apparatus further comprises: an allocation cancellation unit, wherein
the allocation cancellation unit is configured to cancel an allocation relationship between the first area and the first host and an allocation relationship between the second area and the second host.

25. The apparatus according to claim 24, wherein the allocation cancellation unit is specifically configured to perform zero padding on a gap before a third area in the storage space, wherein the third area is a last area in a plurality of areas successively allocated by the storage space on consecutive addresses to corresponding hosts; and
the allocation cancellation unit is specifically configured to send a shutdown message to all hosts corresponding to the storage space, wherein the shutdown message indicates the plurality of areas to stop processing data access, and all the hosts comprise the first host and the second host.

26. The apparatus according to any one of claims 20 to 25, wherein the communication unit is further configured to: when the second data has been written into the second area, and an area that has been allocated before the second area in the storage space has no gap, return a write success response to the second host.

27. The apparatus according to claim 26, wherein the communication unit is specifically configured to receive a query request from the second host, and
the communication unit is specifically configured to return the write success response to the second host based on the query request.

28. The apparatus according to any one of claims 20 to 25, wherein the communication unit is further configured to: when the second data has been written into the second area, and an area that has been allocated before the second area in the storage space has a gap, return a write pending response to the second host.

29. The apparatus according to any one of claims 20 to 28, wherein the storage space is a namespace, and the first area and the second area are areas in the namespace.

30. The apparatus according to any one of claims 20 to 28, wherein the storage space is logical block address space in a shingled magnetic recording disk, and the first area and the second area are areas in the logical block address space.

31. A storage space management apparatus, wherein the storage space management apparatus is used in a storage system, storage space that supports append writing and that is in the storage system comprises a first area and a second area, and the first area and the second area each comprise a segment of consecutive addresses of the storage space, and the apparatus comprises:
a first allocation unit, configured to allocate the first area to a first host; and
a second allocation unit, configured to allocate the second area to a second host, wherein while the first area is in a state of being allocated to the first host, the second area is in a state of being allocated to the second host.

32. The apparatus according to claim 31, wherein the storage system stores constraint information, and the constraint information indicates a maximum quantity of hosts that can be supported within first duration by the storage space in performing data access.

33. The apparatus according to claim 31 or 32, wherein the apparatus further comprises: a communication unit, and
the communication unit is configured to receive a first allocation request from the first host; and
the first allocation unit, specifically configured to allocate the first area to the first host based on the first allocation request.

34. The apparatus according to any one of claims 31 to 33, wherein the apparatus further comprises: the communication unit, configured to receive a second allocation request from the second host, wherein
the second allocation unit is specifically configured to allocate the first area to the first host based on the second allocation request.

35. The apparatus according to any one of claims 31 to 34, wherein the apparatus further comprises a cancellation unit, and
the cancellation unit is configured to cancel an allocation relationship between the first area and the first host and an allocation relationship between the second area and the second host.

36. The apparatus according to claim 35, wherein the cancellation unit is specifically configured to perform zero padding on a gap before a third area in the storage space, wherein the third area is a last area in a plurality of areas successively allocated by the storage space on consecutive addresses to corresponding hosts; and
the cancellation unit is specifically configured to send a shutdown message to all hosts corresponding to the storage space, wherein the shutdown message indicates the plurality of areas to stop processing data access, and all the hosts comprise the first host and the second host.

37. A storage system, comprising: a memory and a processor, wherein the storage is configured to store a group of computer instructions, and when executing the group of computer instructions, the processor implements the method according to any one of claims 1 to 11, or performs the method according to any one of claims 12 to 19.

38. A computer-readable storage medium, wherein the storage medium stores a computer program or instructions, and when the computer program or instructions is/are executed by a processor in a storage system, the method according to any one of claims 1 to 11 is implemented, or the method according to any one of claims 12 to 19 is performed.

39. A hard disk, wherein the hard disk comprises a controller and a storage medium, the hard disk provides storage space that supports append writing, the storage space comprises a first area and a second area, and the first area and the second area each comprise a segment of consecutive addresses of the storage space; and the controller is configured to:
process access of a first host to the first area; and
process access of a second host to the second area, wherein while the first area is in a state of being allocated to the first host, the second area is in a state of being allocated to the second host.

40. The hard disk according to claim 39, wherein the storage space is a namespace, and the first area and the second area are areas in the namespace.

41. The hard disk according to claim 39, wherein the hard disk is a shingled magnetic recording disk, the storage space is logical block address space, and the first area and the second area are areas in the logical block address space.
